(19) Europäisches Patentamt
European Patent Office
Office européen des brevets

(11) **EP 2 237 596 A1**

(12) **EUROPEAN PATENT APPLICATION**
published in accordance with Art. 153(4) EPC

(43) Date of publication:
06.10.2010 Bulletin 2010/40

(51) Int Cl.:
*H04W 24/08* (2009.01)          *H04B 17/00* (2006.01)
*H04L 12/56* (2006.01)          *H04M 3/00* (2006.01)

(21) Application number: 08866500.5

(22) Date of filing: 16.12.2008

(86) International application number:
**PCT/JP2008/072825**

(87) International publication number:
**WO 2009/084421 (09.07.2009 Gazette 2009/28)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: 28.12.2007 JP 2007338895

(71) Applicant: NEC Corporation
Minato-ku
Tokyo 108-8001 (JP)

(72) Inventors:
• WATANABE, Yoshinori
Tokyo 108-8001 (JP)
• MATSUNAGA, Yasuhiko
Tokyo 108-8001 (JP)
• KOBAYASHI, Kosei
Tokyo 108-8001 (JP)

(74) Representative: Vossius & Partner
Siebertstrasse 4
81675 München (DE)

(54) **COMMUNICATION NETWORK QUALITY ANALYSIS SYSTEM, QUALITY ANALYSIS DEVICE, QUALITY ANALYSIS METHOD, AND PROGRAM**

(57)    Provided is a communication network quality analysis technique which can identify a network side communication device, a communication area, or a terminal which causes degradation of quality of the communication network detected by an abnormal communication quality index. The technique analyzes a recording content of a call process performed by the network side communication device and acquires a distribution of quality degradation amounts in respective hierarchies such as a terminal, a network communication device, or a communication area. Thus, the technique estimates a terminal, a network side communication device, or a communication area causing degradation of the communication quality according to a degree of quality degradation degree distribution bias considering the belonging relationship of the terminal, the network side communication device, and the communication area.

FIG. 4

**Description**

[TECHNICAL FIELD]

The present invention relates to a quality analysis system for a communication network, and particularly to a quality analysis system for a communication network for analyzing records of call processing in the communication network, and estimating the cause of quality degradation based on deviation of the degradation.

[BACKGROUND ART]

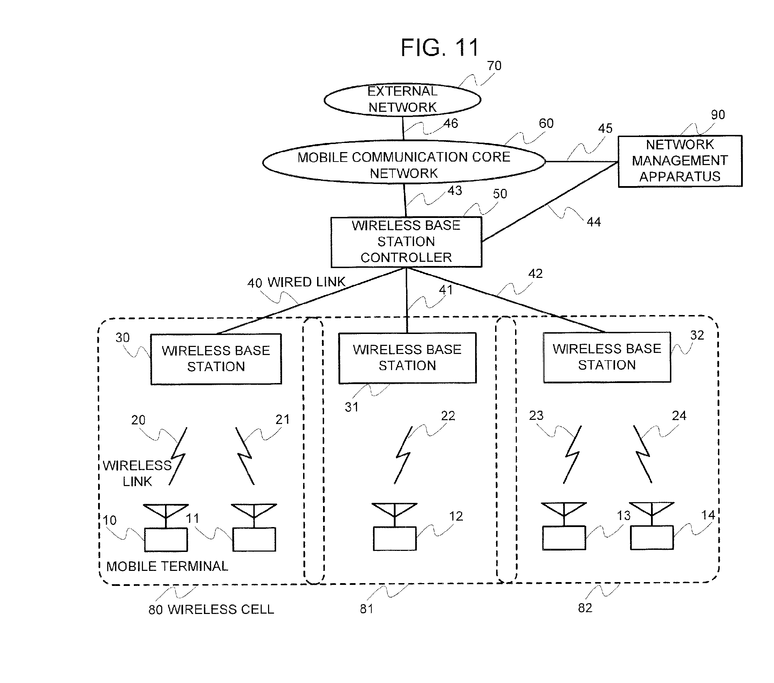

Generally, a large-scale communications system has a plurality of network-side communication devices hierarchically connected to form a communication network. FIG. 11 is a diagram showing a configuration of a mobile communication network, which is an example of such a communication network.

A mobile terminal 10 connects to a wireless base station 30 via a wireless link 20, and a mobile terminal 11 connects to the wireless base station 30 via a wireless link 21. A mobile terminal 12 connects to a wireless base station 31 via a wireless link 22. A mobile terminal 13 connects to a wireless base station 32 via a wireless link 23, and a mobile terminal 14 connects to the wireless base station 32 via a wireless link 24. The wireless base stations 30, 31, 32 are provided with respective wireless cells 80, 81, 82, which each constitute coverage of effective wireless links with mobile terminals.

A wireless base station controller 50 performs transmission/reception of communication traffic and control traffic with a mobile communication core network 60 via a wired link 43 and with its subordinate wireless base stations 30, 31, 32 via wired links 40, 41, 42.

In such a communication network, a communication service provider generally acquires indicators of communication quality from network-side communication devices to detect a faulty operating status of the communication network by comparing the indicators with a predetermined threshold.

For example, in the mobile communication network shown in FIG. 11, a network management apparatus 90 is connected with the wireless base station controller 50 and with a switching center and a server apparatus (not shown) in the mobile communication core network 60 via wired links 44 or 45, and it acquires several kinds of information about communications from these network-side communication devices as indicators of communication quality. The communication service provider refers to the indicators of communication quality acquired by the network management apparatus 90 from the network-side communication devices to monitor faults in the communication devices and quality degradation of communication services. Once any fault is detected in the communication network, the communication service provider applies a remedy to address the fault, such as analysis of the cause, or reconfiguration of operating parameters.

An example of indicators of communication quality of a communication network is described in Non-patent Document 1.

Non-patent Document 1 defines indicators of communication quality that should be periodically acquired for each wireless cell, regarding a wireless base station controller in a mobile communication network in compliance with specifications of 3GPP (3rd Generation Partnership Program), the indicators including a ratio of the number of failed establishments to the number of attempted establishments by a radio access bearer, and a ratio of the number of abnormal releases to the number of successful establishments by a radio access bearer; these indicators having values greater than predetermined thresholds are regarded as abnormal.

Such detection of an abnormal condition using indicators of communication quality acquired from network-side communication devices uses control traffic transmitted/received via a wired/wireless link between a mobile terminal and a wireless base station controller. Thus, for example, when a mobile terminal is located in a radio transmission/reception skip zone in a wireless cell and suffers from poor quality of a wireless link with a wireless base station, it is difficult on a network side to detect degradation of communication quality experienced by the mobile terminal because of instable transmission/reception of control traffic. Similarly, local degradation of communication quality is difficult to detect on a network side because its effect is hardly revealed in indicators of communication quality. Thus, to catch such degradation of communication quality that is difficult to detect on the network side, the communication service provider sometimes also takes advantage of complaints made by users of a communication service.

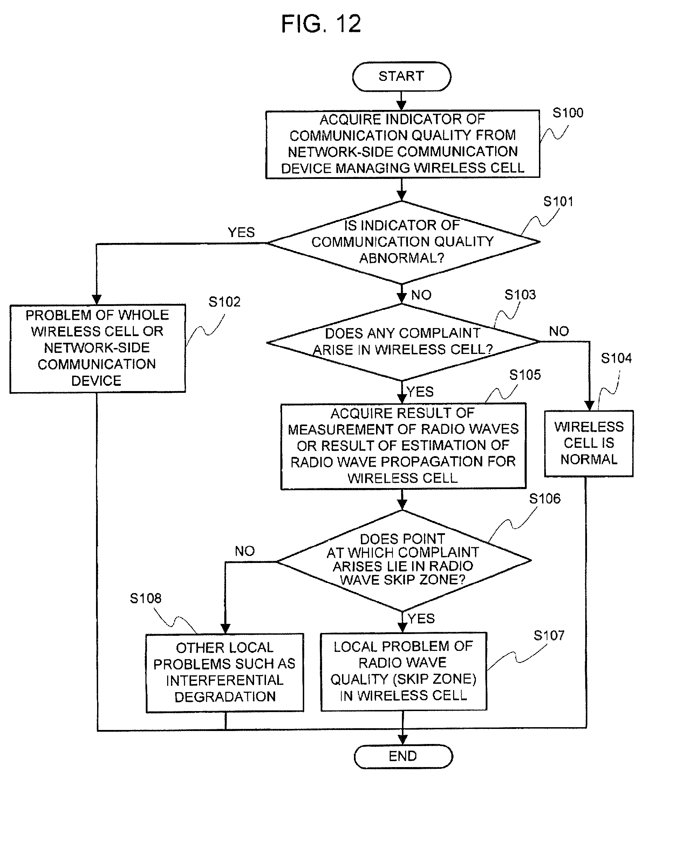

FIG. 12 is a flow chart for explaining an example of analysis processing on communication quality.

In FIG. 12, an indicator of communication quality is first acquired from a network-side communication device such as a wireless base station controller or a wireless base station for monitoring a wireless cell to be monitored (Step S100), and the indicator is evaluated as to whether it is abnormal (Step S101).

In case that an abnormal condition is found for the indicator, it is decided that there is a problem of the whole wireless cell or network-side communication device (Step S102).

On the other hand, no abnormal condition is found in the indicator, this wireless cell is checked as to whether any complaint arises in the cell (Step S103). In case that no complaint arises, this wireless cell is decided to be normal (Step S104).

On the other hand, in case that a complaint arises, a result of radio wave measurement or a result of estimation by a radio wave propagation simulator made on this wireless cell is acquired (Step S105), and the point at which the complaint arises is checked as to whether it lies in a radio wave skip zone (Step S106).

In case that the point at which the complaint arises lies in a radio wave skip zone, the cause of the complaint is decided to be degradation of a wireless link (Step S107). On the other hand, in case that the point at which the complaint arises does not lie in a skip zone, the cause is decided to be quality degradation due to other local problems such as interferential degradation (Step S108).

As described above, a communication service provider performs analysis by catching degradation of communication quality detectable on the network side from indicators of communication quality acquired by a network-side communication device, and catching degradation of communication quality that is difficult to detect on the network side from complaints made by users.

Patent Document 1: JP-P1999-261471A
Non-patent Document 1: 3GPP TS32.403, "Telecommunication management; Performance Management (PM); Performance measurements - UMTS and combined UMTS/GSM (Release 5)," 2004

[DISCLOSURE OF THE INVENTION]

[PROBLEMS TO BE SOLVED BY THE INVENTION]

A general technique of quality analysis, however, poses a problem that in case that an abnormal condition is found in an indicator of communication quality, it is difficult to discriminate between local quality degradation that occurs at a limited position within a communication network and expansive quality degradation from the acquired indicators.

Accordingly, in a wireless communication network, for example, it is difficult to discriminate; quality degradation experienced by a specific user caused by a faulty operation of a specific mobile terminal within a wireless cell, and that occurring throughout a wireless cell caused by a faulty operation of a base station.

Moreover, general quality analysis poses another problem that in case that degradation of communication quality occurs concentrically at a specific user, it is difficult to determine whether the cause of the quality degradation is attributed to a terminal machine or to a communication area in which the user is located from the acquired indicators of communication quality.

Furthermore, general quality analysis poses still another problem that when catching degradation of communication quality that is difficult to detect on the network side using complaints from users, objectivity of an obtained complaint is difficult to evaluate. Since users' sensitivity to quality significantly varies among individuals in general, it is difficult to objectively evaluate the actual degree of quality degradation or the geographical coverage of the effect from reported complaints used as a basis for judging.

Therefore, problems to be solved by the present invention are those as described above, and its object is to provide a technique capable of detecting quality degradation of a communication network by an abnormal condition of an indicator of communication quality acquired from a network-side communication device, discriminating between local quality degradation occurring at a limited position subordinate to the network-side communication device and expansive quality degradation, and for expansive quality degradation, ascending to an upper-level network-side communication device that contains the current network-side communication device to identify a network-side communication device responsible for degradation.

Another object is to provide a technique capable of deciding, for quality degradation of a communication network concentrically experienced by a specific user, whether the cause of quality degradation is attributed to a terminal machine or to a communication area in which the user is located.

Still another object is to provide a technique capable of obtaining, at the time of arising of a complaint, and in an area around the point at which the complaint arises, the presence and geographical distribution of users suffering from degradation of communication quality, to help a manager of the communication network evaluate objectivity of the complaints made by users.

[MEANS FOR SOLVING THE PROBLEMS]

The present invention for solving the aforementioned problems provides a quality analysis system for a communication network in which communication devices are hierarchically connected, **characterized in that** the system comprises: a recorder for recording processing contents of call processing by the communication devices in the above-described communication network; a detecting means for detecting degradation of communication quality of the above-described communication network; a quality degradation deviation calculator for, in case that degradation of communication quality is detected by the above-described detecting means, obtaining a distribution of a quantity of quality degradation for each hierarchical level of the above-described communication network and obtaining a degree of deviation of the above-described distribution using the above-described recorded processing contents of call processing; and a cause-of-degradation estimating means for estimating a terminal, a communication device or a communication area attributed to the cause of the degradation of communication quality using the above-described calculated degree of deviation and information about a hierarchical relationship representing terminals, communication devices and communication areas constituting respective hierarchical levels.

The present invention for solving the aforementioned problems provides a quality analysis apparatus for a communication network in which communication devices are hierarchically connected, **characterized in**

**that** the apparatus comprises: a detecting means for detecting degradation of communication quality of the above-described communication network; a quality degradation deviation calculator for, in case that degradation of communication quality is detected by the above-described detecting means, obtaining a distribution of a quantity of quality degradation for each hierarchical level of the above-described communication network and obtaining a degree of deviation of the above-described distribution using processing contents of call processing by communication devices in the above-described communication network; and a cause-of-degradation estimating means for estimating a terminal, a communication device or a communication area attributed to the cause of the degradation of communication quality using the above-described calculated degree of deviation and information about a hierarchical relationship representing terminals, communication devices and communication areas constituting respective hierarchical levels.

The present invention for solving the aforementioned problems provides a quality analysis method for a communication network in which communication devices are hierarchically connected, **characterized in that** the method comprises: a detecting step of detecting degradation of communication quality of the above-described communication network; a quality degradation deviation calculating step of, in case that degradation of communication quality is detected at the above-described detecting step, obtaining a distribution of a quantity of quality degradation for each hierarchical level of the above-described communication network and obtaining a degree of deviation of the above-described distribution using processing contents of call processing by communication devices in the above-described communication network; and a cause-of-degradation estimating step of estimating a terminal, a communication device or a communication area attributed to the cause of the degradation of communication quality using the above-described calculated degree of deviation and information about a hierarchical relationship representing terminals, communication devices and communication areas constituting respective hierarchical levels.

The present invention for solving the aforementioned problems provides a program for a quality analysis apparatus for a communication network in which communication devices are hierarchically connected, causing the above-described quality analysis apparatus to function as: a detecting means for detecting degradation of communication quality of the above-described communication network; a quality degradation deviation calculator for, in case that degradation of communication quality is detected by the above-described detecting means, obtaining a distribution of a quantity of quality degradation for each hierarchical level of the above-described communication network and obtaining a degree of deviation of said distribution using processing contents of call processing by communication devices in the above-described communication network; and a cause-of-degradation estimating means for estimating a terminal, a communication device or a communication area attributed to the cause of the degradation of communication quality using the above-described calculated degree of deviation and information about a hierarchical relationship representing terminals, communication devices and communication areas constituting respective hierarchical levels.

[EFFECTS OF THE INVENTION]

According to the present invention, recorded processing contents of call processing by a network-side communication device are analyzed; a distribution of a quantity of quality degradation is obtained for each network-side communication device, communication area or terminal; and a network-side communication device, a communication area or a terminal attributed to the cause of the degradation of communication quality is estimated from the degree of deviation of the distribution of the quantity of quality degradation based on a hierarchical relationship of network-side communication devices, communication areas or terminals constituting a communication network.

Thus, the quality analysis system for a communication network is capable of detecting quality degradation of a communication network by an abnormal condition of an indicator of communication quality acquired from a network-side communication device, discriminating between local quality degradation occurring at a limited position subordinate to the current network-side communication device and expansive quality degradation, and for expansive quality degradation, ascending to an upper-level network-side communication device that contains the current network-side communication device to identify a network-side communication device responsible for degradation.

[BRIEF DESCRIPTION OF THE DRAWINGS]

[FIG. 1] A diagram showing an exemplary configuration of a quality analysis system for a mobile communication network in accordance with the present invention.
[FIG. 2] A block diagram showing a configuration of a quality analysis system for a communication network according to a first embodiment of the present invention.
[FIG. 3] A diagram showing exemplary display of a result of analysis according to the first embodiment of the present invention.
[FIG. 4] A flow chart for explaining an operation of the quality analysis system for a communication network according to the first embodiment of the present invention.
[FIG. 5] A block diagram showing a configuration of a quality analysis system for a communication network according to a second embodiment of the present invention.

[FIG. 6] A diagram showing exemplary display of a result of analysis according to the second embodiment of the present invention.

[FIG. 7] A flow chart for explaining an operation of the quality analysis system for a communication network according to the second embodiment of the present invention.

[FIG. 8] A block diagram showing a configuration of a quality analysis system for a communication network according to a third embodiment of the present invention.

[FIG. 9] A diagram showing exemplary display of a result of analysis according to the third embodiment of the present invention.

[FIG. 10] A flow chart for explaining an operation of the quality analysis system for a communication network according to the third embodiment of the present invention.

[FIG. 11] A diagram showing an exemplary configuration of an apparatus for a communication network, which is a technique related to the present application.

[FIG. 12] A flow chart for explaining exemplary analysis processing on communication quality, which is a technique related to the present application.

[EXPLANATION OF SYMBOLS]

10 - 14, 305 Mobile terminal
20 - 24 Wireless link
30 - 32, 306 Wireless base station
40 - 46 Wired link
50 Wireless base station controller
60 Mobile communication core network
70 External network
80 - 82 Wireless cell
90 Network management apparatus
100 Quality analysis system for a communication network
101 Quality indicator evaluating section
102 Call processing log collecting section
103 Quality degradation deviation calculating section
104 Cause-of-degradation estimating section
105 Network configuration DB
106 Result display control section
107 Call processing log analyzing section
108 Input section
109 Customer information DB
110 Wireless area design DB
111 Degraded-area estimating section
112 Radio wave quality evaluating section
113 Wireless area analyzing section

114 Complaint DB
115 Complaint detecting section
116 Complaint analyzing section
300 Result of analysis of call processing log
304 Building
307 Wireless area
308 Radio wave quality
309 Result of analysis of wireless area
310 Point at which complaint arises

[BEST MODES FOR CARRYING OUT THE INVENTION]

To explain features of the present invention, they will be concretely described hereinbelow with reference to the accompanying drawings.

<First Embodiment>

A first embodiment for practicing the present invention will be described in detail with reference to the accompanying drawings.

(Configuration of First Embodiment)

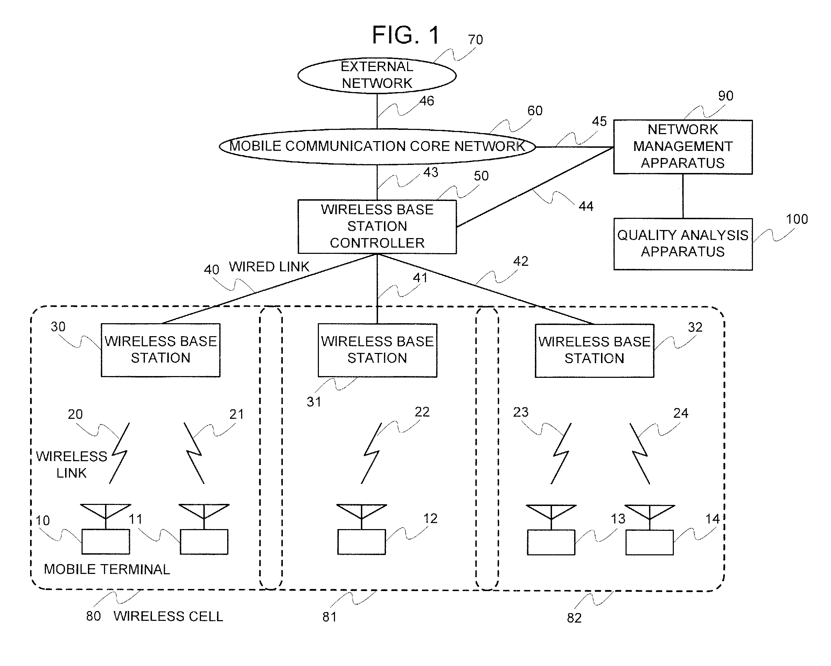

FIG. 1 is a diagram showing a configuration of a quality analysis system of the present invention for a mobile communication network.

The quality analysis system of the present invention comprises mobile terminals 10 - 14, wireless base stations 30 - 32, a wireless base station controller 50, a network management apparatus 90, and a quality analysis apparatus 100.

A mobile terminal 10 connects to a wireless base station 30 via a wireless link 20, and a mobile terminal 11 connects to the wireless base station 30 via a wireless link 21. A mobile terminal 12 connects to a wireless base station 31 via a wireless link 22. A mobile terminal 13 connects to a wireless base station 32 via a wireless link 23, and a mobile terminal 14 connects to the wireless base station 32 via a wireless link 24. The wireless base stations 30, 31, 32 are provided with respective wireless cells 80, 81, 82, which each constitute coverage of effective wireless links with mobile terminals. A plurality of such network-side communication devices are hierarchically connected like a tree structure to form a communication network.

In such a communication network, the network management apparatus 90 receives information about abnormal disconnection experienced in call processing made at the wireless base stations 30 - 32, which are terminals of the communication network, from the network-side communication devices such as switching centers and server apparatuses (not shown) within a mobile communication core network 60 and the wireless base station controller 50, and records the information as a log. The network management apparatus 90 also acquires several kinds of information about communications as indicators of communication quality from the network-side communication devices via the wired links 44 or 45. The "several kinds of information about communications" include, for example, information about data transmission/reception, control traffic, etc., between apparatuses in the mobile communication core network and wireless base station controller 50, between the wireless base station controller 50 and the wireless base stations 30 - 32, or between the wireless base stations 30 - 32 and mobile terminals 10 - 14.

The wireless base station controller 50 performs transmission/reception of communication traffic and control traffic with the mobile communication core network 60 via a wired link 43 and with its subordinate wireless base stations 30, 31, 32 via wired links 40, 41, 42.

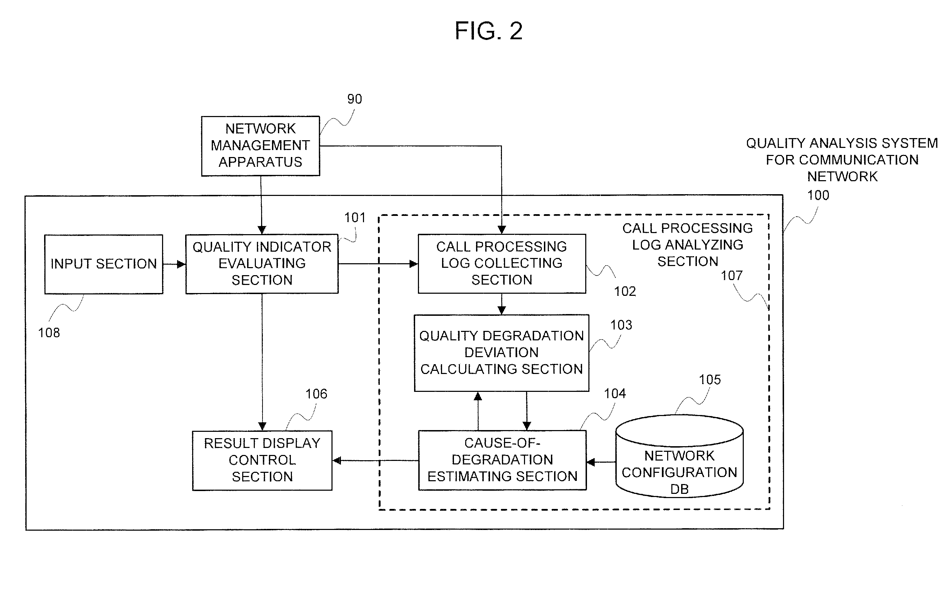

FIG. 2 is a block diagram showing a configuration of the quality analysis system for a communication network in the first embodiment of the present invention.

The quality analysis apparatus 100 in this embodiment comprises an input section 108, a quality indicator evaluating section 101, a call processing log analyzing section 107, and a result display control section 106.

The input section 108 is for specifying an analysis operation, including a communication network to be analyzed and a period of analysis.

The quality indicator evaluating section 101 evaluates whether an abnormal condition occurs in the communication network by acquiring an indicator of communication quality for a network-side communication device to be analyzed from the network management apparatus 90.

The result display control section 106 makes control for displaying a result of analysis from the call processing log analyzing section 107, which will be described below, on a display device such as a CRT.

The call processing log analyzing section 107 is for collecting a call processing log from the network management apparatus 90 for analysis.

The call processing log analyzing section 107 comprises a call processing log collecting section 102, a quality degradation deviation calculating section 103, a cause-of-quality-degradation estimating section 104, and a network configuration DB 105.

The call processing log collecting section 102 acquires a call processing log from the network management apparatus 90 in case that an abnormal condition is detected as a result of evaluation by the quality indicator evaluating section 101. In the acquired call processing log is recorded abnormal disconnection occurring in the course of call processing between a mobile terminal and a wireless base station, and information about a failure in communication can be obtained from the log. An example of such a call processing log includes what is generally referred to as call processing alarm log. The call processing alarm log is stored in a recording device provided in the wireless base station controller 50 or network management apparatus 90 as a time-sequence log containing information such as the date and time at which abnormal disconnection occurs, communication devices involved in abnormal disconnection, a point in call processing at which abnormal disconnection occurs, and a reason of occurrence. Such a technique is described in Japanese Patent Application Laid Open No. H11-261471, for example.

The quality degradation deviation calculating section 103 uses a call processing log acquired by the call processing log collecting section 102 to obtain the number of failures (failure frequency) in communications per unit time for each network-side communication device (for example, for each wireless base station, or for each wireless base station controller) or for each terminal at the same level within a communication network to be analyzed, and calculates a degree of deviation in a distribution thereof.

The cause-of-quality-degradation estimating section 104 estimates a cause of degradation of communication quality by referring to a result of the calculation by the quality degradation deviation calculating section 103 and to a network configuration DB 105, which will be described below.

In the network configuration DB 105 are recorded information representing network-side communication devices that belong to each hierarchical level of the communication network, information about a connection relationship between any pair of network-side communication devices within the communication network, and, for a wireless communication network, about a hierarchical relationship between a wireless base station and a wireless cell or between a wireless cell and a mobile terminal. A result of analysis by the call processing log analyzing section 107 is input to the result display control section 106, which displays the result of analysis on a display device such as a CRT.

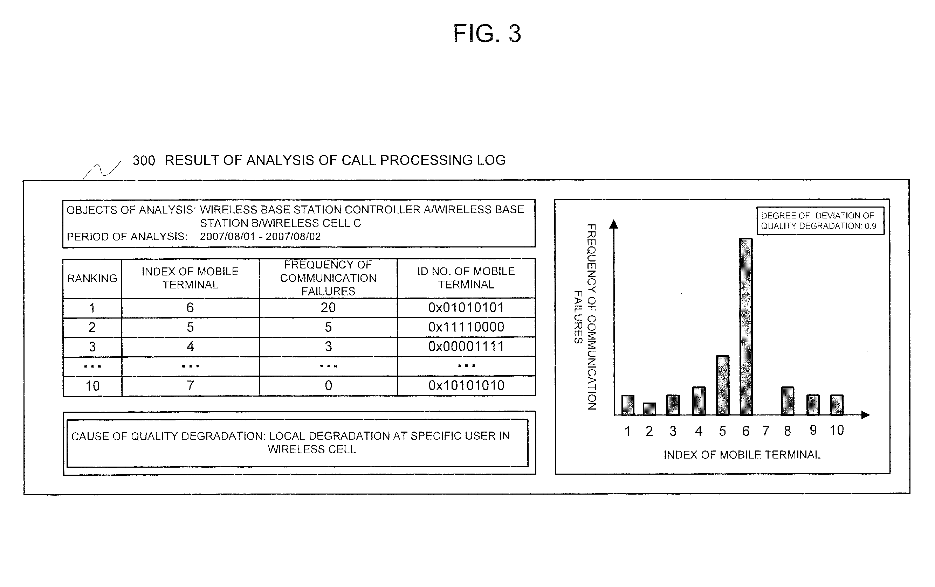

FIG. 3 is a diagram showing exemplary display of a result of analysis of a call processing log displayed by the result display control section 106 on a display device. A result of analysis of a call processing log 300 is exemplary display of a result of analysis about quality degradation detected in a wireless cell in a wireless communication network. The result of analysis of a call processing log 300 graphically shows a result of the calculated frequency of communication failures from a log of call processing for each mobile terminal within a wireless cell. It also shows a result of quantitative evaluation of the degree at which quality degradation due to failures in a communication occurs concentrically at a specific mobile terminal as a degree of deviation of quality degradation. Moreover, it shows a result of estimation of a cause of quality degradation at the cause-of-quality-degradation estimating section 104.

(Operation of First Embodiment)

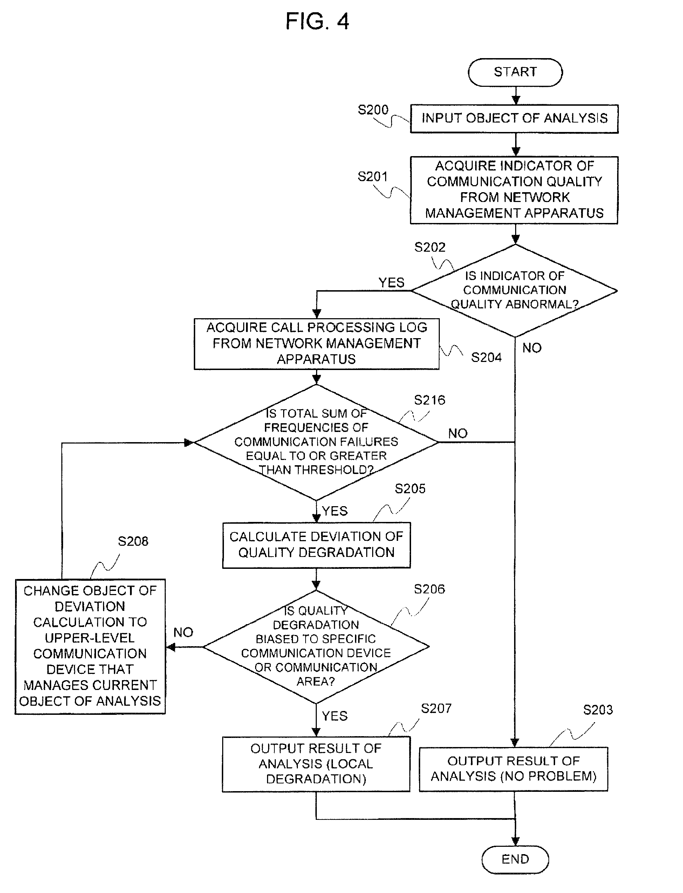

Next, an operation of the first embodiment according to the present invention will be described in detail with reference to FIG. 4.

FIG. 4 is a flow chart for explaining an operation of the quality analysis system for a communication network according to this embodiment. Assume that the network management apparatus 90 already has therein accumulated indicators of communication quality and a log of call processing.

In this embodiment, first, a network-side communication device (or communication area) to be analyzed and a period for analysis are specified and input via the input section 108 (Step S200).

In response to the input information supplied via the input section 108, the quality indicator evaluating section 101 acquires an indicator of communication quality of the object of analysis from the network management apparatus 90 (Step S201), and compares it with a predetermined threshold in magnitude to evaluate whether this indicator of communication quality is abnormal (Step S202).

In case that the indicator of communication quality is normal, the result display control section 106 outputs a result of analysis "No problem" to the display device, and the process is terminated (Step S203).

On the other hand, in case that the indicator of communication quality is evaluated to be abnormal by the quality indicator evaluating section 101 at Step S202, a call processing log of the object of analysis is acquired from the network management apparatus 90 via the call processing log collecting section 102 (Step S204).

The quality degradation deviation calculating section 103 uses the acquired call processing log to obtain the number of failures (failure frequency) of communications per unit time for each network-side communication device (or communication area or terminal) subordinate to the network-side communication device (or communication area) to be analyzed.

The quality degradation deviation calculating section 103 compares the total sum of failure frequencies of network-side communication devices (or communication areas or terminals) subordinate to the network-side communication device (or communication area) to be analyzed with a predetermined threshold (Step S216).

In case that the total sum of failure frequencies is smaller than the predetermined threshold, the result display control section 106 is notified of the fact, and in response thereto, the result display control section 106 outputs a result of analysis "No problem" on the display device, whereupon the process is terminated (Step S203).

On the other hand, in case that the total sum of failure frequencies is equal to or greater than the threshold, the quality degradation deviation calculating section 103 calculates the degree of deviation in a distribution of failure frequencies of the network-side communication devices (or communication areas or terminals) (Step S205).

A statistical population for calculating the degree of deviation of a distribution consists of network-side communication devices (or communication areas or terminals) subordinate to a network-side communication device (or communication area) to be analyzed; for example, when the object of analysis is a wireless base station in a wireless communication network, all wireless cells subordinate to that wireless base station constitute a population, or when the object to be analyzed is a wireless cell, all mobile terminals subordinate to that wireless cell constitute a population. While this embodiment addresses a case in which a Herfindahl index is employed as an example of an indicator for quantifying deviation of quality degradation, quantification of deviation of quality degradation may be achieved using other indicators, such as entropy.

A Herfindahl index is obtained by EQ. (1). A parameter fi is an i-th parameter in a set of N parameters. The range of the Herfindahl index is 1/N - 1, and the index assumes a value closer to one for larger deviation of a distribution and a value closer to 1/N for a more uniform distribution. This embodiment obtains the Herfindahl index by using a parameter fi as a failure frequency in a communication made by an i-th network-side communication device (or communication area or terminal) in N network-side communication devices (or communication areas or terminals), and regards quality degradation as being biased to a specific network-side communication device (or communication area or terminal) when the Herfindahl index exceeds a predetermined threshold.

$$ HI = \sum_{i=1}^{N} \left( \frac{fi}{\sum_{j=1}^{N} fj} \right)^2 \quad \cdots [\text{EQ. 1}] $$

The cause-of-degradation estimating section 104 evaluates whether quality degradation is biased to a specific network-side communication device (or communication area or terminal) (Step S206), and in case that it is biased, the result display control section 106 outputs a result of analysis "Local degradation" to the display device, whereupon the process is terminated (Step S207).

On the other hand, in case that no deviation is found in quality degradation, a population for calculating deviation is changed to a network-side communication device (or communication area) at an upper level to which the current network-side communication device (or communication area or terminal) to be analyzed belongs (Step S208), and deviation of quality degradation is calculated again (Step S205) to search for a network-side communication device (or communication area) to which quality degradation is biased. This process is applied to objects at all levels, and each time deviation is found, a result of analysis is displayed on the display device, or in case that no deviation is finally found, the fact is displayed on the display device.

The first embodiment of the present invention is thus capable of detecting quality degradation of a communication network by an abnormal condition of an indicator of communication quality acquired from a network-side communication device, discriminating between local quality degradation occurring at a limited position subordinate to the current network-side communication device and expansive quality degradation, and for expansive quality degradation, ascending to an upper-level network-side communication device (or communication area) that contains the current network-side communication device (or communication area) responsible for degradation.

<Second Embodiment>

Next, a second embodiment for practicing the present invention will be described in detail with reference to the accompanying drawings.

(Configuration of Second Embodiment)

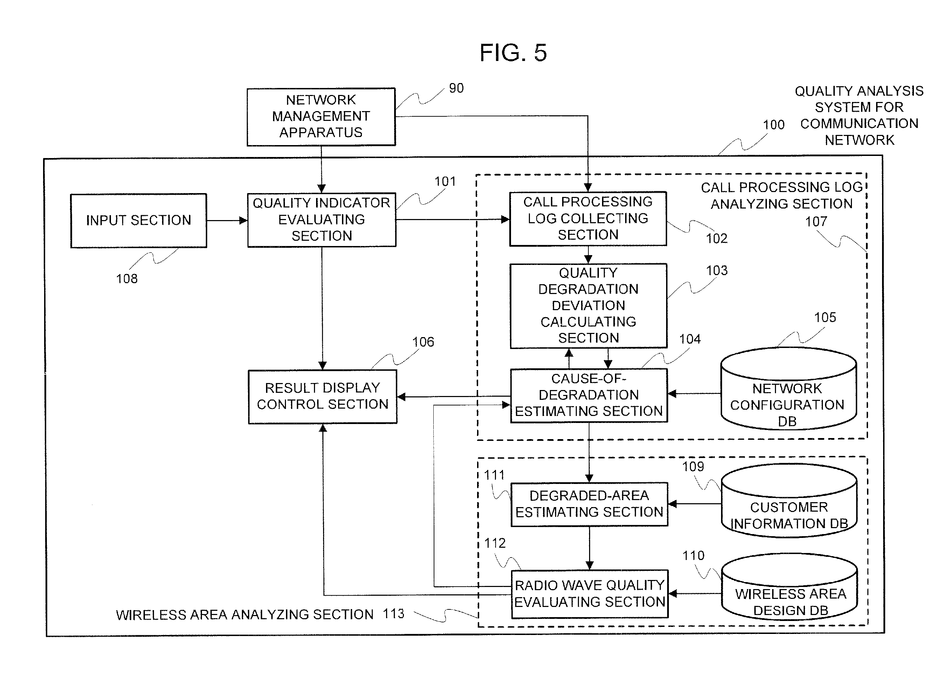

FIG. 5 is a block diagram showing a configuration of a quality analysis system for a communication network in the second embodiment of the present invention.

Referring to FIG. 5, the quality analysis system 100 in this embodiment comprises a wireless area analyzing section 113 for evaluating radio wave quality in an area having degraded communication quality, in addition to the first embodiment of the present invention. This embodiment is similar to the first embodiment, except that a result of analysis from the wireless area analyzing section 113 is input to the cause-of-degradation estimating section 104 and result display control section 106.

The wireless area analyzing section 113 comprises a degraded-area estimating section 111, a radio wave quality evaluating section 112, a customer information DB 109, and a wireless area design DB 110.

When local quality degradation occurs in a wireless cell in a wireless communication network, the degraded-area estimating section 111 acquires terminal identification information for a user concentrically experiencing quality degradation from the cause-of-degradation estimating section 104 to locate the position of the user. In locating the position of the user, the customer information DB 109 is referred to as needed.

The radio wave quality evaluating section 112 evaluates radio wave quality in an area around the position located by the degraded-area estimating section 111. At that time, the wireless area design DB 110 is referred to, in which information on a design of the wireless area, such as a result of measurement of radio wave quality in that area or a result of estimation by a simulation, is stored.

A result of the evaluation of radio wave quality at the wireless area analyzing section 113 is input to the cause-of-degradation estimating section 104. Moreover, a result of the analysis by the wireless area analyzing section 113 is input to the result display control section 106 and displayed on a display device such as CRT.

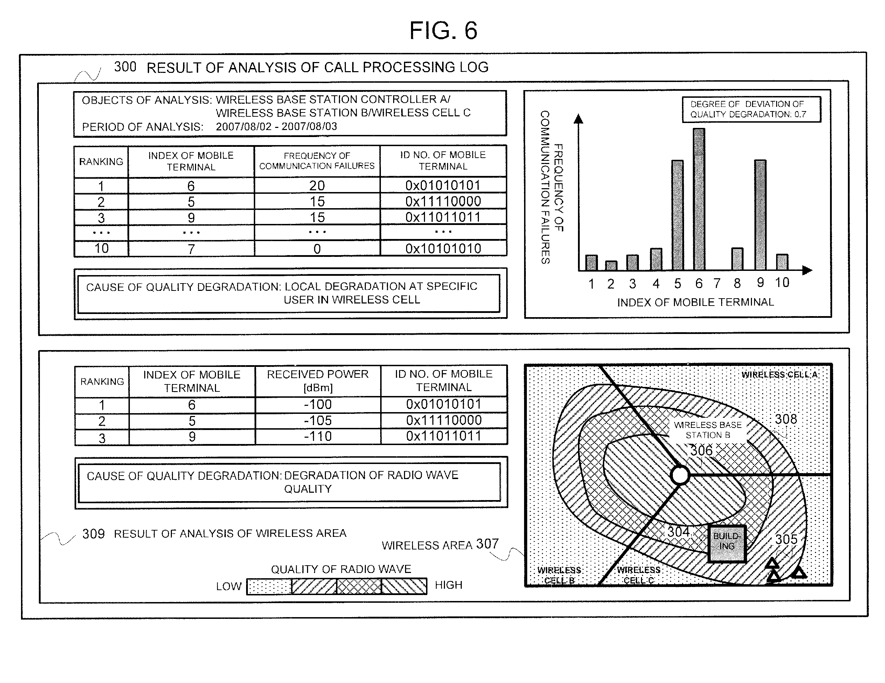

FIG. 6 is a diagram showing exemplary display of a result of analysis of a call processing log displayed by the result display control section 106 on the display device in the second embodiment of the present invention. The configuration of this embodiment is similar to the first embodiment except that a result of analysis of a wireless area 309 is additionally displayed.

The result of analysis of a wireless area 309 displays, for a mobile terminal of a user concentrically experiencing quality degradation, a received power of the mobile terminal at the position located by the degraded-area estimating section 111. It also displays, for an area around the wireless cell experiencing local quality degradation (wireless area 307), radio wave quality, a geographical distribution of buildings, etc., a distribution of mobile terminals concentrically experiencing quality degradation in a superposed manner.

(Operation of Second Embodiment)

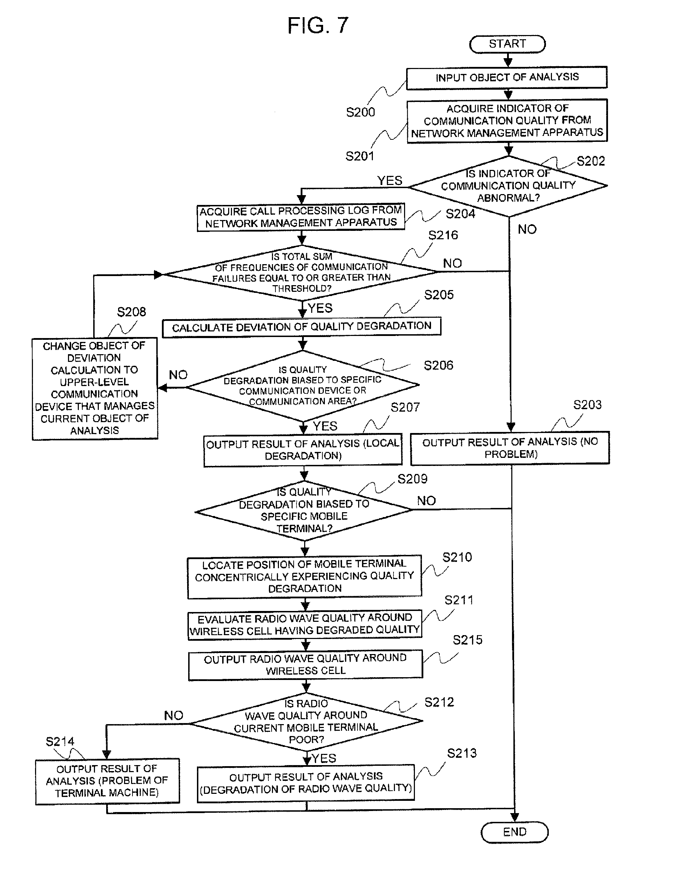

Next, an operation of the embodiment of the present invention will be described in detail with reference to FIG. 7.

FIG. 7 is a flow chart for explaining an operation of the quality analysis system for a communication network in accordance with this embodiment. The operation of this embodiment is similar to that of the first embodiment, except that processing for analysis of a wireless area is added subsequent to Step S207.

In case that the object to be analyzed is a wireless communication network, this embodiment evaluates whether quality degradation is biased to a specific mobile terminal subsequent to Step S207 (Step S209), and in case that quality degradation is not biased to any specific mobile terminal, the process is terminated.

On the other hand, in case that quality degradation is biased to a specific mobile terminal, the degraded-area estimating section 111 locates the position of the mobile terminal concentrically experiencing quality degradation (Step S210). At that time, in case that the position of the mobile terminal can be located by a GPS (Global Positioning System) or wireless base station positioning, that position is employed. In case that such positional information is unavailable, the customer information DB 109 is referred to, and in case that the site where the user of the mobile terminal is likely to stay, for example, the customer's residence, place of employment, or school, is located within that wireless cell, the position is temporarily used as the position of that mobile terminal.

The radio wave quality evaluating section 112 evaluates radio wave quality in an area around the wireless cell in which quality is degraded. At that time, radio wave quality in that wireless area is evaluated by comparing a result of measurement of a received power acquired from the wireless area design DB 110 or a result of estimation by a simulation with quality required by a mobile terminal or a communication device such as wireless base station (Step S211). Moreover, radio wave quality, a geographical distribution of buildings or the like, and a distribution of mobile terminals of users concentrically experiencing quality degradation in the current wireless area are output to the result display control section 106 (Step S215).

Furthermore, the position of the mobile terminal located at Step S210 and a result of radio wave quality evaluated at Step S211 are compared at the cause-of-degradation estimating section 104 (Step S212), and in case that radio wave quality is poor around the current mobile terminal, the result display control section 106 outputs a result of analysis "radio wave quality degradation" to the display device, and the process is terminated (Step S213).

On the other hand, in case that radio wave quality is good around the current mobile terminal, the result display control section 106 outputs a result of analysis "Problem in terminal machine" to the display device, and the process is terminated (Step S214).

The second embodiment of the present invention is capable of deciding, for quality degradation of a communication network concentrically experienced by a specific user, whether the cause of quality degradation is attributed to a terminal machine or to a communication area in which the user is located.

<Third Embodiment>

Next, a third embodiment for practicing the present invention will be described in detail with reference to the accompanying drawings.

(Configuration of Third Embodiment)

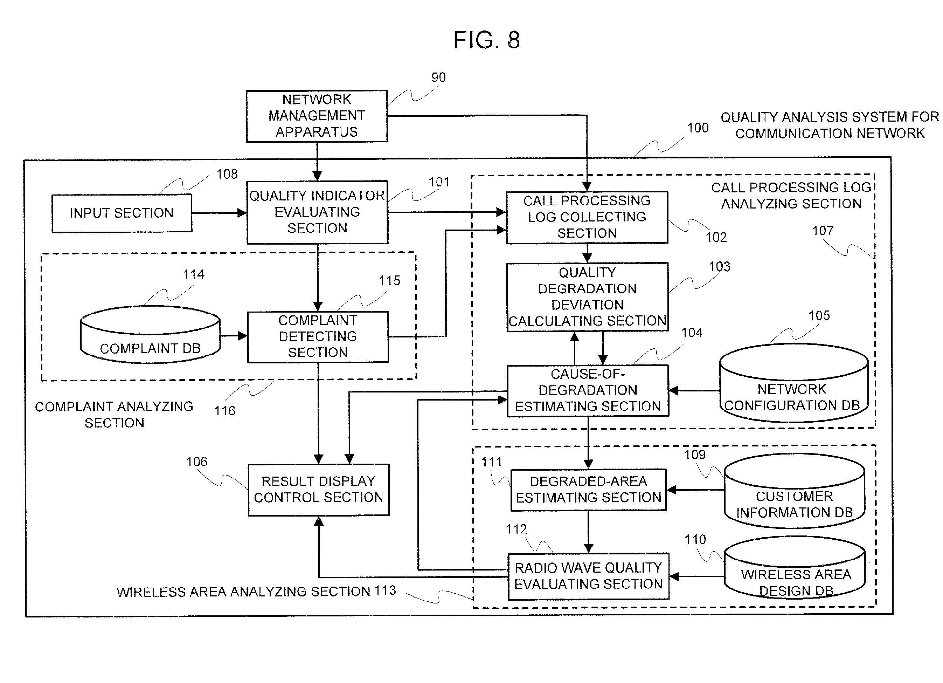

FIG. 8 is a block diagram showing a configuration of a quality analysis system for a communication network in the third embodiment of the present invention.

Referring to FIG. 8, the quality analysis system 100 in this embodiment is similar to the second embodiment except that the it comprises a complaint analyzing section 116 for detecting a complaint arising in a communication network and activating analysis of a call processing log and analysis of radio wave quality in a wireless area, in addition to the second embodiment of the present invention.

The complaint analyzing section 116 comprises a complaint DB 114 and a complaint detecting section 115.

The complaint detecting section 115 refers to the complaint DB 114 to check whether any complaint arises in a communication network to be analyzed, and in case that a complaint arises, activates the call processing log analyzing section 107 to analyze a call processing log for the current communication network. Moreover, it also activates the wireless area analyzing section 113 to evaluate radio wave quality around the point at which the complaint arises. Results of the analyses are input to the result display control section 106 and displayed on a display device such as a CRT.

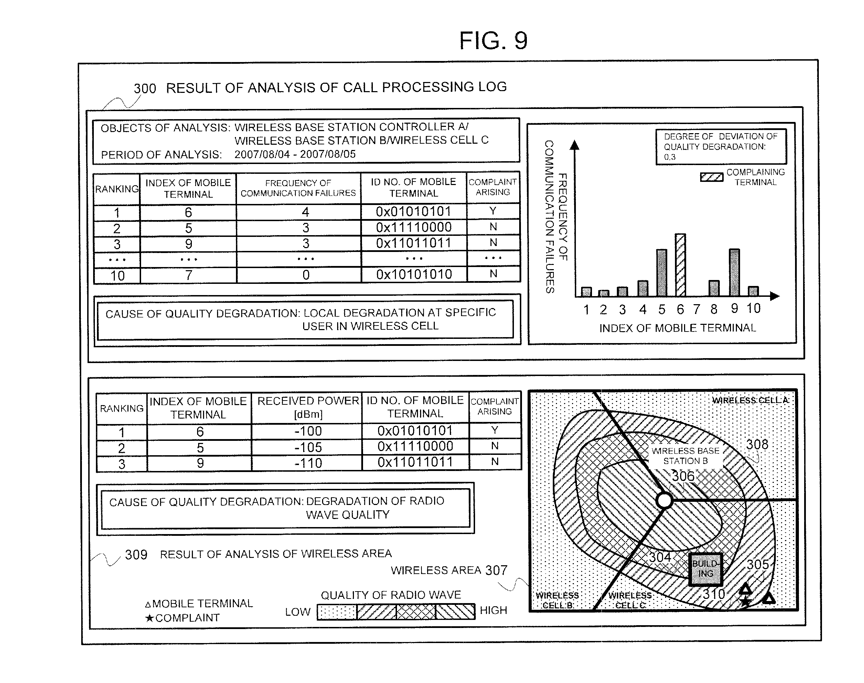

FIG. 9 is a diagram showing exemplary display of a result of analysis displayed by the result display control section 106 on the display device in the third embodiment of the present invention. The configuration of this embodiment is similar to the second embodiment except that a result of analysis of complaints is additionally displayed. In obtaining a frequency of communication failures for each mobile terminal within a wireless cell, the result of analysis of a call processing log 300 shows correspondence between a mobile terminal within the wireless cell and a mobile terminal of a user who made a complaint. The result of analysis of a wireless area 309 shows the correspondence between a mobile terminal concentrically experiencing quality degradation and a mobile terminal of a user who made a complaint, and the point at which the complaint arises.

(Operation of Third Embodiment)

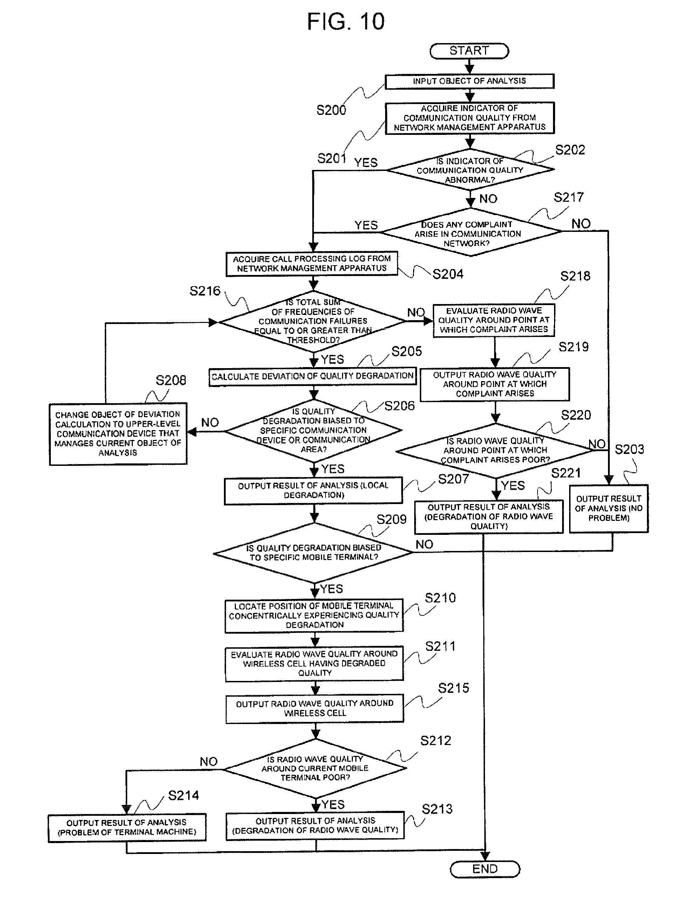

Next, an operation of this embodiment will be described in detail with reference to FIG. 10.
FIG. 10 is a flow chart for explaining an operation of the quality analysis system for a communication network according to this embodiment. The operation of this embodiment is similar to that in the second embodiment, except that an operation related to analysis of complaints, Steps S217 - S221, is added.

According to this embodiment, in case that the indicator of communication quality is decided not to be abnormal at Step S202, the complaint DB 114 is referred to make a check as to whether any complaint arises from a user in a communication network to be analyzed (Step S217).

If no complaint arises, a result of analysis "No problem" is output to the result display control section 106, and the process is terminated (Step S203).

On the other hand, in case that a complaint arises, processing of analysis of a call processing log from Step S204 is started.

At Step S216, in case that the total sum of failure frequencies in communications for each mobile terminal obtained from a call processing log is smaller than a predetermined threshold, radio wave quality around the point at which the complaint arises is evaluated to check whether any quality degradation that cannot be detected on the network side occurs (Step S218), and the result display control section 106 outputs a result of the evaluation to the display device (Step S219).

In case that radio wave quality is good around the point at which the complaint arises, the cause of the complaint is attributed to a user's subjective problem, and the result display control section 106 outputs a result of analysis "No problem" to the display device, and the process is terminated (Step S203).

On the other hand, in case that radio wave quality is poor around the point at which the complaint arises, the cause of the complaint is attributed to radio wave quality degradation, and the result display control section 106 outputs a result of analysis "Radio wave quality degradation" to the display device, and the process is terminated (Step S221).

The third embodiment of the present invention is capable of obtaining, at the time of arising of a complaint, and in an area around the point at which the complaint arises, the presence and geometrical distribution of users suffering from degradation of communication quality, to help a manager of the communication network evaluate objectivity of the complaints made by users.

While the terminal of the present invention described above may be configured by hardware, it is possible to implement it by a computer program, as obvious from the preceding description.

A function and operation similar to those in the embodiments described above is achieved by a processor running with programs stored in a program memory. It should be noted that part of functions of the embodiments described above may be implemented by a computer program.

According to the present invention, records of call processing at a network-side communication device are analyzed to obtain a distribution of a quantity of quality degradation for each network-side communication device, communication area or terminal, and based on the hierarchical relationship of the network-side communication devices, communication areas and terminals constituting the communication network, a network-side communication device, communication area or terminal to which the cause of degradation of communication quality is attributed is estimated from the degree of deviation of a distribution of the above-described quantity of quality degradation.

Thus, the quality analysis system for a communication network is capable of detecting quality degradation of a communication network by an abnormal condition of an indicator of communication quality acquired from a network-side communication device, discriminating between local quality degradation occurring at a limited position subordinate to the network-side communication device and expansive quality degradation, and for expansive quality degradation, ascending to an upper-level network-side communication device that contains the current network-side communication device to identify a network-side communication device responsible for degradation.

Moreover, according to the present invention, records of call processing at a network-side communication device are analyzed to locate a position of a network-side communication device, communication area or terminal concentrically experiencing degradation of communication quality, evaluate radio wave quality around the position of the above-described network-side communication device, communication area or terminal, and determine the cause of degradation of communication quality from a result of the evaluation of the above-described radio wave quality. Thus, the quality analysis system for a communication network is capable of deciding, for quality degradation of a communication network concentrically experienced by a specific user, whether the cause of quality degradation is attributed to a terminal machine or to a communication area in which the user is located.

Furthermore, according to the present invention, records of call processing at a network-side communication device are analyzed to obtain, at the time of arising of a complaint, and in an area around the point at which the complaint arises, the presence and geometrical distribution of users suffering from degradation of communication quality, and radio wave quality around the point at which the complaint arises is evaluated to estimate the cause of the complaint. Thus, the quality analysis system for a communication network helps a manager of the communication network easily evaluate objectivity of the complaint made by a user.

The present application claims priority based on Japanese Patent Application No. 2007-338895 filed on December 28, 2007, disclosure of which is incorporated herein in its entirety.

## Claims

1. A quality analysis system for a communication network in which communication devices are hierarchically connected, comprising:

   a recorder for recording processing contents of call processing by the communication devices in said communication network;
   a detecting means for detecting degradation of communication quality of said communication network;
   a quality degradation deviation calculator for, in case that degradation of communication quality is detected by said detecting means, obtaining a distribution of a quantity of quality degradation for each hierarchical level of said communication network and obtaining a degree of deviation of said distribution using said recorded processing contents of call processing; and
   a cause-of-degradation estimating means for estimating a terminal, a communication device or a communication area attributed to the cause of the degradation of communication quality using said calculated degree of deviation and information about a hierarchical relationship representing terminals, communication devices and communication areas constituting respective hierarchical levels.

2. A quality analysis system for a communication network according to claim 1, wherein said quality degradation deviation calculator uses a Herfindahl index or entropy to evaluate a degree of deviation of the distribution of said quantity of quality degradation.

3. A quality analysis system for a communication network according to claim 1, wherein, in case that degradation of communication quality does not concentrically occur in any specific terminal, communication device or communication area in the distribution of said quantity of quality degradation, said quality degradation deviation calculator obtains a degree of deviation of the distribution of said quantity of quality degradation for a communication device or communication area belonging to an upper hierarchical level that contains said terminal, said communication device or said communication area.

4. A quality analysis system for a communication network according to claim 1, comprising:

   a means for detecting degradation of communication quality using a complaint from a user in case that said detecting means has detected no degradation of communication quality;
   a quality-degraded-area estimating means for locating a position of a terminal, communication device or communication area at which degradation of communication quality concentrically occurs from said processing contents; and
   a radio wave quality evaluating means for evaluating radio wave quality around a position of said estimated quality-degraded area or around a location at which quality degradation occurs indicated by said complaint,
   wherein said cause-of-degradation estimating means estimates a cause of degradation of communication quality from a result of the evaluation of said radio wave quality.

5. A quality analysis system for a communication network according to claim 4, wherein, in case that information on a position of a terminal at which the degradation of said communication quality concentrically occurs cannot be obtained, said degraded-area estimating means acquires information about a place where a user possessing said terminal is staying from customer information possessed by a communication service provider to estimate a position of said terminal.

6. A quality analysis system for a communication network according to claim 4, wherein, in case that the degradation of said communication quality occurs concentrically at a specific terminal, and the terminal is located at a place with poor radio wave quality, said cause-of-degradation estimating means decides the cause of degradation to be degradation of radio wave quality, or in case that the degradation of said communication quality occurs concentrically at a specific terminal, and said terminal is located at a place with good radio wave quality, it decides the cause of degradation to be a fault in a terminal machine.

7. A quality analysis system for a communication network according to claim 4, wherein, in case that a frequency of communication failures in a communication device or communication area around a location at which quality degradation occurs indicated by said complaint is equal to or smaller than a predetermined threshold, and a position at which the complaint arises is a place with poor radio wave quality, said cause-of-degradation estimating means decides the cause of the complaint to be degradation of radio wave quality, or in case that a frequency of communication failures in a communication device or communication area around a location at which quality degradation occurs indicated by said complaint is equal to or smaller than a predetermined threshold, and a position at which the complaint arises is a place with good radio wave quality, it decides the cause of the complaint to be a user's subjective problem.

8. A quality analysis apparatus for a communication network in which communication devices are hierarchically connected, comprising:

   a detecting means for detecting degradation of communication quality of said communication network;
   a quality degradation deviation calculator for, in case that degradation of communication quality is detected by said detecting means, obtaining a distribution of a quantity of quality degradation for each hierarchical level of said communication network and obtaining a degree of deviation of said distribution using processing contents of call processing by communication devices in said communication network; and
   a cause-of-degradation estimating means for estimating a terminal, a communication device or a communication area attributed to the cause of the degradation of communication quality using said calculated degree of deviation and information about a hierarchical relationship representing terminals, communication devices and communication areas constituting respective hierarchical levels.

9. A quality analysis apparatus according to claim 8, wherein said quality degradation deviation calculator uses a Herfindahl index or entropy to evaluate a degree of deviation of the distribution of said quantity of quality degradation.

10. A quality analysis apparatus according to claim 8, wherein, in case that degradation of communication quality does not concentrically occur in any specific terminal, communication device or communication area in the distribution of said quantity of quality degradation, said quality degradation deviation calculator obtains a degree of deviation of the distribution of said quantity of quality degradation for a communication device or communication area belonging to an upper hierarchical level that contains said terminal, said communication device or said communication area.

11. A quality analysis apparatus according to claim 8, comprising:

a means for detecting degradation of communication quality using a complaint from a user in case that said detecting means has detected no degradation of communication quality;
a quality-degraded-area estimating means for locating a position of a terminal, communication device or communication area at which degradation of communication quality concentrically occurs from said processing contents; and
a radio wave quality evaluating means for evaluating radio wave quality around a position of said estimated quality-degraded area or around a location at which quality degradation occurs indicated by said complaint,
wherein said cause-of-degradation estimating means estimates a cause of degradation of communication quality from a result of the evaluation of said radio wave quality.

12. A quality analysis apparatus according to claim 11, wherein, in case that information on a position of a terminal at which the degradation of said communication quality concentrically occurs cannot be obtained, said degraded-area estimating means acquires information about a place where a user possessing said terminal is staying from customer information possessed by a communication service provider to estimate a position of said terminal.

13. A quality analysis apparatus according to claim 11, wherein, in case that the degradation of said communication quality occurs concentrically at a specific terminal, and the terminal is located at a place with poor radio wave quality, said cause-of-degradation estimating means decides the cause of degradation to be degradation of radio wave quality, or in case that the degradation of said communication quality occurs concentrically at a specific terminal, and said terminal is located at a place with good radio wave quality, it decides the cause of degradation to be a fault in a terminal machine.

14. A quality analysis apparatus according to claim 11, wherein, in case that a frequency of communication failures in a communication device or communication area around a location at which quality degradation occurs indicated by said complaint is equal to or smaller than a predetermined threshold, and a position at which the complaint arises is a place with poor radio wave quality, said cause-of-degradation estimating means decides the cause of the complaint to be degradation of radio wave quality, or in case that a frequency of communication failures in a communication device or communication area around a location at which quality degradation occurs indicated by said complaint is equal to or smaller than a predetermined threshold, and a position at which the complaint arises is a place with good radio wave quality, it decides the cause of the complaint to be a user's subjective problem.

15. A quality analysis method for a communication network in which communication devices are hierarchically connected, comprising:

a detecting step of detecting degradation of communication quality of said communication network;
a quality degradation deviation calculating step of, in case that degradation of communication quality is detected at said detecting step, obtaining a distribution of a quantity of quality degradation for each hierarchical level of said communication network and obtaining a degree of deviation of said distribution using processing contents of call processing by communication devices in said communication network; and
a cause-of-degradation estimating step of estimating a terminal, a communication device or a communication area attributed to the cause of the degradation of communication quality using said calculated degree of deviation and information about a hierarchical relationship representing terminals, communication devices and communication areas constituting respective hierarchical levels.

16. A quality analysis method according to claim 15, wherein said quality degradation deviation calculating step uses a Herfindahl index or entropy to evaluate a degree of deviation of the distribution of said quantity of quality degradation.

17. A quality analysis method according to claim 15, wherein, in case that degradation of communication quality does not concentrically occur in any specific terminal, communication device or communication area in the distribution of said quantity of quality degradation, said quality degradation deviation calculating step obtains a degree of deviation of the distribution of said quantity of quality degradation for a communication device or communication area belonging to an upper hierarchical level that contains said terminal, said communication device or said communication area.

18. A quality analysis method according to in claim 15, comprising:

a step of detecting degradation of communication quality using a complaint from a user in case that said detecting step has detected no degradation of communication quality;
a quality-degraded-area estimating step of locating a position of a terminal, communication device or communication area at which degradation of communication quality concentrically occurs from said processing contents; and
a radio wave quality evaluating step of evaluating radio wave quality around a position of said estimated quality-degraded area or around a location at which quality degradation occurs indicated by said complaint,
wherein said cause-of-degradation estimating step estimates a cause of degradation of communication quality from a result of the evaluation of said radio wave quality.

19. A quality analysis method according to claim 18, wherein, in case that information on a position of a terminal at which the degradation of said communication quality concentrically occurs cannot be obtained, said degraded-area estimating step acquires information about a place where a user possessing said terminal is staying from customer information possessed by a communication service provider to estimate a position of said terminal.

20. A quality analysis method according to claim 18, wherein, in case that the degradation of said communication quality occurs concentrically at a specific terminal, and the terminal is located at a place with poor radio wave quality, said cause-of-degradation estimating step decides the cause of degradation to be degradation of radio wave quality, or in case that the degradation of said communication quality occurs concentrically at a specific terminal, and said terminal is located at a place with good radio wave quality, it decides the cause of degradation to be a fault in a terminal machine.

21. A quality analysis method according to claim 18, wherein, in case that a frequency of communication failures in a communication device or communication area around a location at which quality degradation occurs indicated by said complaint is equal to or smaller than a predetermined threshold, and a position at which the complaint arises is a place with poor radio wave quality, said cause-of-degradation estimating step decides the cause of the complaint to be degradation of radio wave quality, or in case that a frequency of communication failures in a communication device or communication area around a location at which quality degradation occurs indicated by said complaint is equal to or smaller than a predetermined threshold, and the position at which the complaint arises is a place with good radio wave quality, it decides the cause of the complaint to be a user's subjective problem.

22. A program for a quality analysis apparatus for a communication network in which communication devices are hierarchically connected, said program causing said quality analysis apparatus to function as:

a detecting means for detecting degradation of communication quality of said communication network;
a quality degradation deviation calculator for, in case that degradation of communication quality is detected by said detecting means, obtaining a distribution of a quantity of quality degradation for each hierarchical level of said communication network and obtaining a degree of deviation of said distribution using processing contents of call processing by communication devices in said communication network; and
a cause-of-degradation estimating means for estimating a terminal, a communication device or a communication area attributed to the cause of the degradation of communication quality using said calculated degree of deviation and information about a hierarchical relationship representing terminals, communication devices and communication areas constituting respective hierarchical levels.

**Amended claims under Art. 19.1 PCT**

1. (Currently amended) A quality analysis system for a communication network in which communication devices are hierarchically connected, comprising:

a recorder for recording processing contents of call processing by the communication devices in said communication network;
a detecting means for detecting degradation of communication quality of said communication network;
a quality degradation deviation calculator for, in case that degradation of communication quality is detected by said detecting means, obtaining a distribution of a quantity of quality degradation for each hierarchical level of said communication network and quantifying a degree of deviation of said distribution using said recorded processing contents of call processing; and

a cause-of-degradation estimating means for estimating a terminal, a communication device or a communication area attributed to the cause of the degradation of communication quality using said calculated degree of deviation and information about a hierarchical relationship representing terminals, communication devices and communication areas constituting respective hierarchical levels.

2. A quality analysis system for a communication network according to claim 1, wherein said quality degradation deviation calculator uses a Herfindahl index or entropy to evaluate a degree of deviation of the distribution of said quantity of quality degradation.

3. (Currently amended) A quality analysis system for a communication network according to claim 1, wherein, said cause-of-degradation estimating means estimates a cause of degradation of communication quality from a degree of deviation of the distribution of said quantity of quality degradation, said degree of deviation being obtained by said quality degradation deviation calculator in case that degradation of communication quality does not concentrically occur in any specific terminal, communication device or communication area in the distribution of said quantity of quality degradation, for a communication device or communication area belonging to an upper hierarchical level that contains said terminal, said communication device or said communication area.

4. (Currently amended) A quality analysis system for a communication network according to claim 1, comprising:

a means for detecting degradation of communication quality using a complaint from a user in case that said detecting means has detected no degradation of communication quality;
a quality-degraded-area estimating means for locating a position of a terminal, communication device or communication area at which degradation of communication quality concentrically occurs from said processing contents; and
a radio wave quality evaluating means for evaluating radio wave quality in a surrounding area around a position of said estimated quality-degraded area or around a location at which quality degradation occurs indicated by said complaint, wherein said cause-of-degradation estimating means estimates a cause of degradation of communication quality from a result of the evaluation of said radio wave quality.

5. A quality analysis system for a communication network according to claim 4, wherein, in case that information on a position of a terminal at which the degradation of said communication quality concentrically occurs cannot be obtained, said degraded-area estimating means acquires information about a place where a user possessing said terminal is staying from customer information possessed by a communication service provider to estimate a position of said terminal.

6. A quality analysis system for a communication network according to claim 4, wherein, in case that the degradation of said communication quality occurs concentrically at a specific terminal, and the terminal is located at a place with poor radio wave quality, said cause-of-degradation estimating means decides the cause of degradation to be degradation of radio wave quality, or in case that the degradation of said communication quality occurs concentrically at a specific terminal, and said terminal is located at a place with good radio wave quality, it decides the cause of degradation to be a fault in a terminal machine.

7. A quality analysis system for a communication network according to claim 4, wherein, in case that a frequency of communication failures in a communication device or communication area around a location at which quality degradation occurs indicated by said complaint is equal to or smaller than a predetermined threshold, and a position at which the complaint arises is a place with poor radio wave quality, said cause-of-degradation estimating means decides the cause of the complaint to be degradation of radio wave quality, or in case that a frequency of communication failures in a communication device or communication area around a location at which quality degradation occurs indicated by said complaint is equal to or smaller than a predetermined threshold, and a position at which the complaint arises is a place with good radio wave quality, it decides the cause of the complaint to be a user's subjective problem.

8. (Currently amended) A quality analysis apparatus for a communication network in which communication devices are hierarchically connected, comprising:

a detecting means for detecting degradation of communication quality of said communication network;
a quality degradation deviation calculator for, in case that degradation of communication quality is detected by said detecting means, obtaining a distribution of a quantity of quality degradation for each hierarchical level of said communication network and quantifying a degree of deviation of said distribution using processing contents of call processing by communication devices in said communication network; and a cause-of-degradation estimating means for estimating a terminal, a communication device or a communication area attributed to the cause of the degradation of communication quality using said calculated degree of deviation and information about a hierarchical relationship representing terminals, communication devices and communication areas constituting respective hierarchical levels.

9. A quality analysis apparatus according to claim 8, wherein said quality degradation deviation calculator uses a Herfindahl index or entropy to evaluate a degree of deviation of the distribution of said quantity of quality degradation.

10. (Currently amended) A quality analysis apparatus according to claim 8, wherein, said cause-of-degradation estimating means estimates a cause of degradation of communication quality from a degree of deviation of the distribution of said quantity of quality degradation, said degree of deviation being obtained by said quality degradation deviation calculator in case that degradation of communication quality does not concentrically occur in any specific terminal, communication device or communication area in the distribution of said quantity of quality degradation, for a communication device or communication area belonging to an upper hierarchical level that contains said terminal, said communication device or said communication area.

11. (Currently amended) A quality analysis apparatus according to claim 8, comprising:

a means for detecting degradation of communication quality using a complaint from a user in case that said detecting means has detected no degradation of communication quality; a quality-degraded-area estimating means for locating a position of a terminal, communication device or communication area at which degradation of communication quality concentrically occurs from said processing contents; and a radio wave quality evaluating means for evaluating radio wave quality in a surrounding area around a position of said estimated quality-degraded area or around a location at which quality degradation occurs indicated by said complaint, wherein said cause-of-degradation estimating means estimates a cause of degradation of communication quality from a result of the evaluation of said radio wave quality.

12. A quality analysis apparatus according to claim 11, wherein, in case that information on a position of a terminal at which the degradation of said communication quality concentrically occurs cannot be obtained, said degraded-area estimating means acquires information about a place where a user possessing said terminal is staying from customer information possessed by a communication service provider to estimate a position of said terminal.

13. A quality analysis apparatus according to claim 11, wherein, in case that the degradation of said communication quality occurs concentrically at a specific terminal, and the terminal is located at a place with poor radio wave quality, said cause-of-degradation estimating means decides the cause of degradation to be degradation of radio wave quality, or in case that the degradation of said communication quality occurs concentrically at a specific terminal, and said terminal is located at a place with good radio wave quality, it decides the cause of degradation to be a fault in a terminal machine.

14. A quality analysis apparatus according to claim 11, wherein, in case that a frequency of communication failures in a communication device or communication area around a location at which quality degradation occurs indicated by said complaint is equal to or smaller than a predetermined threshold, and a position at which the complaint arises is a place with poor radio wave quality, said cause-of-degradation estimating means decides the cause of the complaint to be degradation of radio wave quality, or in case that a frequency of communication failures in a communication device or communication area around a location at which quality degradation occurs indicated by said complaint is equal to or smaller than a predetermined threshold, and a position at which the complaint arises is a place with good radio wave quality, it decides the cause of the complaint to be a user's subjective problem.

15. (Currently amended) A quality analysis method for a communication network in which communication devices are hierarchically connected, comprising:

a detecting step of detecting degradation of communication quality of said communication network; a quality degradation deviation calculating step of, in case that degradation of communication quality is detected at said detecting step, obtaining a distribution of a quantity of quality degradation for each hierarchical level of said communication network and quantifying a degree of deviation of said distribution using processing contents of call processing by communication devices in said communication network; and

a cause-of-degradation estimating step of estimating a terminal, a communication device or a communication area attributed to the cause of the degradation of communication quality using said calculated degree of deviation and information about a hierarchical relationship representing terminals, communication devices and communication areas constituting respective hierarchical levels.

16. A quality analysis method according to claim 15, wherein said quality degradation deviation calculating step uses a Herfindahl index or entropy to evaluate a degree of deviation of the distribution of said quantity of quality degradation.

17. (Currently amended) A quality analysis method according to claim 15, wherein, in case that degradation of communication quality does not concentrically occur in any specific terminal, communication device or communication area in the distribution of said quantity of quality degradation, said quality degradation deviation calculating step obtains a degree of deviation of the distribution of said quantity of quality degradation for a communication device or communication area belonging to an upper hierarchical level that contains said terminal, said communication device or said communication area; and said cause-of-degradation estimating step estimates a cause of degradation of communication quality from the degree of deviation of the distribution of the quantity of quality degradation at said upper hierarchical level.

18. (Currently amended) A quality analysis method according to in claim 15, comprising:

a step of detecting degradation of communication quality using a complaint from a user in case that said detecting step has detected no degradation of communication quality;

a quality-degraded-area estimating step of locating a position of a terminal, communication device or communication area at which degradation of communication quality concentrically occurs from said processing contents; and

a radio wave quality evaluating step of evaluating radio wave quality in a surrounding area around a position of said estimated quality-degraded area or around a location at which quality degradation occurs indicated by said complaint, wherein said cause-of-degradation estimating step estimates a cause of degradation of communication quality from a result of the evaluation of said radio wave quality.

19. A quality analysis method according to claim 18, wherein, in case that information on a position of a terminal at which the degradation of said communication quality concentrically occurs cannot be obtained, said degraded-area estimating step acquires information about a place where a user possessing said terminal is staying from customer information possessed by a communication service provider to estimate a position of said terminal.

20. A quality analysis method according to claim 18, wherein, in case that the degradation of said communication quality occurs concentrically at a specific terminal, and the terminal is located at a place with poor radio wave quality, said cause-of-degradation estimating step decides the cause of degradation to be degradation of radio wave quality, or in case that the degradation of said communication quality occurs concentrically at a specific terminal, and said terminal is located at a place with good radio wave quality, it decides the cause of degradation to be a fault in a terminal machine.

21. A quality analysis method according to claim 18, wherein, in case that a frequency of communication failures in a communication device or communication area around a location at which quality degradation occurs indicated by said complaint is equal to or smaller than a predetermined threshold, and a position at which the complaint arises is a place with poor radio wave quality, said cause-of-degradation estimating step decides the cause of the complaint to be degradation of radio wave quality, or in case that a frequency of communication failures in a communication device or communication area around a location at which quality degradation occurs indicated by said complaint is equal to or smaller than a predetermined threshold, and the position at which the complaint arises is a place with good radio wave quality, it decides the cause of the complaint to be a user's subjective problem.

22. (Currently amended) A program for a quality analysis apparatus for a communication network in which communication devices are hierarchically connected, said program causing said quality analysis apparatus to function as:

a detecting means for detecting degradation of communication quality of said communication network;

a quality degradation deviation calculator for, in case that degradation of communication quality is detected by said detecting means, obtaining a distribution of a quantity of quality degradation for each hierarchical level of said communication network and quantifying a degree of deviation of said distribution using processing contents of call processing by communication devices in said communication network; and
a cause-of-degradation estimating means for estimating a terminal, a communication device or a communication area attributed to the cause of the degradation of communication quality using said calculated degree of deviation and information about a hierarchical relationship representing terminals, communication devices and communication areas constituting respective hierarchical levels.

23. (New) A quality analysis system for a communication network according to claim 1, wherein said cause-of-degradation estimating means evaluates whether degradation of communication quality concentrically occurs at a specific terminal, communication device or communication area from the degree of deviation of the distribution of said quantity of quality degradation, and estimates a cause of degradation of communication quality from a result of said evaluation.

24. (New) A quality analysis apparatus according to claim 8, wherein said cause-of-degradation estimating means evaluates whether degradation of communication quality concentrically occurs at a specific terminal, communication device or communication area from the degree of deviation of the distribution of said quantity of quality degradation, and estimates a cause of degradation of communication quality from a result of said evaluation.

25. (New) A quality analysis method according to claim 15, wherein said cause-of-degradation estimating means evaluates whether degradation of communication quality concentrically occurs at a specific terminal, communication device or communication area from the degree of deviation of the distribution of said quantity of quality degradation, and estimates a cause of degradation of communication quality from a result of said evaluation.

FIG. 1

- 70 EXTERNAL NETWORK
- 60 MOBILE COMMUNICATION CORE NETWORK
- 90 NETWORK MANAGEMENT APPARATUS
- 100 QUALITY ANALYSIS APPARATUS
- 50 WIRELESS BASE STATION CONTROLLER
- 30, 31, 32 WIRELESS BASE STATION
- 10, 11, 12, 13, 14 MOBILE TERMINAL
- 20, 21, 22, 23, 24 WIRELESS LINK
- 40 WIRED LINK
- 80, 81, 82 WIRELESS CELL
- 41, 42, 43, 44, 45, 46

# FIG. 2

QUALITY ANALYSIS SYSTEM FOR COMMUNICATION NETWORK — 100

CALL PROCESSING LOG ANALYZING SECTION — 107

NETWORK MANAGEMENT APPARATUS — 90

QUALITY INDICATOR EVALUATING SECTION — 101

CALL PROCESSING LOG COLLECTING SECTION — 102

QUALITY DEGRADATION DEVIATION CALCULATING SECTION — 103

CAUSE-OF-DEGRADATION ESTIMATING SECTION — 104

NETWORK CONFIGURATION DB — 105

RESULT DISPLAY CONTROL SECTION — 106

INPUT SECTION — 108

# FIG. 3

300  RESULT OF ANALYSIS OF CALL PROCESSING LOG

OBJECTS OF ANALYSIS: WIRELESS BASE STATION CONTROLLER A/WIRELESS BASE
STATION B/WIRELESS CELL C
PERIOD OF ANALYSIS:   2007/08/01 - 2007/08/02

| RANKING | INDEX OF MOBILE TERMINAL | FREQUENCY OF COMMUNICATION FAILURES | ID NO. OF MOBILE TERMINAL |
|---|---|---|---|
| 1 | 6 | 20 | 0x01010101 |
| 2 | 5 | 5 | 0x11110000 |
| 3 | 4 | 3 | 0x00001111 |
| ... | ... | ... | ... |
| 10 | 7 | 0 | 0x10101010 |

CAUSE OF QUALITY DEGRADATION: LOCAL DEGRADATION AT SPECIFIC USER IN
WIRELESS CELL

DEGREE OF DEVIATION OF QUALITY DEGRADATION: 0.9

FREQUENCY OF COMMUNICATION FAILURES

1  2  3  4  5  6  7  8  9  10

INDEX OF MOBILE TERMINAL

EP 2 237 596 A1

FIG. 4

```
                              ┌──────────┐
                              │  START   │
                              └────┬─────┘
                                   │
         S200          ┌───────────▼────────────┐
              ~~~      │  INPUT OBJECT OF ANALYSIS │
                       └───────────┬────────────┘
                                   │
         S201          ┌───────────▼────────────┐
              ~~~      │   ACQUIRE INDICATOR OF  │
                       │   COMMUNICATION QUALITY │
                       │      FROM NETWORK       │
                       │  MANAGEMENT APPARATUS   │
                       └───────────┬────────────┘
                                   │
                      S202         │
                           ~~~   ╱─▼─╲
                              ╱  IS INDICATOR OF ╲
              YES           ╱    COMMUNICATION     ╲
         ◄───────────────  ╱   QUALITY ABNORMAL?    ╲
         │                 ╲                        ╱
         │                  ╲                      ╱
         │                   ╲────────┬───────────╱
         │                            │ NO
┌────────▼────────────┐               │
│ ACQUIRE CALL PROCESSING LOG │        │
│  FROM NETWORK MANAGEMENT   │         │
│       APPARATUS      ~~~ S204│        │
└────────┬────────────┘        │       │
         │                     │       │
        ╱▼╲         S216        │       │
      ╱ IS TOTAL SUM OF ╲  ~~~   │       │
     ╱ FREQUENCIES OF     ╲  NO  │       │
    ╱ COMMUNICATION FAILURES╲────┘       │
    ╲ EQUAL TO OR GREATER   ╱            │
     ╲ THAN THRESHOLD?    ╱              │
      ╲──────────┬──────╱               │
                 │ YES    S205           │
         ┌───────▼───────┐  ~~~          │
         │ CALCULATE DEVIATION OF │      │
         │  QUALITY DEGRADATION   │      │
         └───────┬───────┘               │
                 │                        │
                ╱▼╲        S206           │
              ╱ IS QUALITY ╲  ~~~         │
   ┌────────┐╱ DEGRADATION  ╲             │
   │        │ BIASED TO SPECIFIC ╲  NO    │
   │ ◄──────  COMMUNICATION DEVICE ╲──────┘
   │        ╲ OR COMMUNICATION    ╱
   │        ╲     AREA?          ╱
   │         ╲──────┬──────────╱
   │                │ YES
```

S208

CHANGE OBJECT OF
DEVIATION
CALCULATION TO
UPPER-LEVEL
COMMUNICATION
DEVICE THAT
MANAGES CURRENT
OBJECT OF ANALYSIS

S207

OUTPUT RESULT OF
ANALYSIS (LOCAL
DEGRADATION)

S203

OUTPUT RESULT OF
ANALYSIS (NO PROBLEM)

END

## FIG. 5

QUALITY ANALYSIS SYSTEM FOR COMMUNICATION NETWORK 100

NETWORK MANAGEMENT APPARATUS 90

CALL PROCESSING LOG ANALYZING SECTION 107

INPUT SECTION 108

QUALITY INDICATOR EVALUATING SECTION 101

CALL PROCESSING LOG COLLECTING SECTION 102

QUALITY DEGRADATION DEVIATION CALCULATING SECTION 103

NETWORK CONFIGURATION DB 105

RESULT DISPLAY CONTROL SECTION 106

CAUSE-OF-DEGRADATION ESTIMATING SECTION 104

DEGRADED-AREA ESTIMATING SECTION 111

CUSTOMER INFORMATION DB 109

RADIO WAVE QUALITY EVALUATING SECTION 112

WIRELESS AREA DESIGN DB 110

WIRELESS AREA ANALYZING SECTION 113

EP 2 237 596 A1

# FIG. 6

## 300 RESULT OF ANALYSIS OF CALL PROCESSING LOG

OBJECTS OF ANALYSIS: WIRELESS BASE STATION CONTROLLER A/
WIRELESS BASE STATION B/WIRELESS CELL C
PERIOD OF ANALYSIS: 2007/08/02 - 2007/08/03

| RANKING | INDEX OF MOBILE TERMINAL | FREQUENCY OF COMMUNICATION FAILURES | ID NO. OF MOBILE TERMINAL |
|---|---|---|---|
| 1 | 6 | 20 | 0x01010101 |
| 2 | 5 | 15 | 0x11110000 |
| 3 | 9 | 15 | 0x11011011 |
| ... | ... | ... | ... |
| 10 | 7 | 0 | 0x10101010 |

CAUSE OF QUALITY DEGRADATION: LOCAL DEGRADATION AT SPECIFIC
USER IN WIRELESS CELL

DEGREE OF DEVIATION OF QUALITY DEGRADATION: 0.7

FREQUENCY OF COMMUNICATION FAILURES

INDEX OF MOBILE TERMINAL

1 2 3 4 5 6 7 8 9 10

| RANKING | INDEX OF MOBILE TERMINAL | RECEIVED POWER [dBm] | ID NO. OF MOBILE TERMINAL |
|---|---|---|---|
| 1 | 6 | -100 | 0x01010101 |
| 2 | 5 | -105 | 0x11110000 |
| 3 | 9 | -110 | 0x11011011 |

CAUSE OF QUALITY DEGRADATION: DEGRADATION OF RADIO WAVE
QUALITY

309 RESULT OF ANALYSIS OF WIRELESS AREA

WIRELESS AREA 307

QUALITY OF RADIO WAVE
LOW [     ] HIGH

WIRELESS CELL A

WIRELESS BASE STATION B
306
308
304
BUILD-ING
305
WIRELESS CELL B
WIRELESS CELL C

EP 2 237 596 A1

# FIG. 7

```
                                    ( START )
                                        │
                                        ▼
                          ┌──────────────────────────────┐
                          │   INPUT OBJECT OF ANALYSIS    │
                 S200     └──────────────────────────────┘
                                        │
                                        ▼
                          ┌──────────────────────────────┐
                          │   ACQUIRE INDICATOR OF        │
                          │   COMMUNICATION QUALITY FROM  │
                          │   NETWORK MANAGEMENT APPARATUS│
                 S201     └──────────────────────────────┘
                                        │
                                        ▼            S202
                    YES           ◇ IS INDICATOR OF ◇
         ┌─────────────────────── COMMUNICATION QUALITY
         │                          ABNORMAL?     ◇
         │                                │ NO
         ▼                                │
  ┌──────────────────────────┐  S204      │
  │ ACQUIRE CALL PROCESSING   │           │
  │ LOG FROM NETWORK          │           │
  │ MANAGEMENT APPARATUS      │           │
  └──────────────────────────┘  S216      │
         │                                │
         ▼            ◇ IS TOTAL SUM OF ◇  NO
  ┌──────── FREQUENCIES OF COMMUNICATION ──────────┐
  │        FAILURES EQUAL TO OR GREATER THAN       │
  │              THRESHOLD?   ◇                     │
  │                    │ YES          S205          │
  │                    ▼                            │
  │  ┌──────────────────────────────────────────┐  │
  │  │ CALCULATE DEVIATION OF QUALITY DEGRADATION│  │
  │  └──────────────────────────────────────────┘  │
  │ S208               │           S206             │
  │                    ▼                            │
┌──────────────┐      ◇ IS QUALITY ◇   NO           │
│ CHANGE OBJECT │   DEGRADATION BIASED TO SPECIFIC   │
│ OF DEVIATION  │◄── COMMUNICATION DEVICE OR ────    │
│ CALCULATION TO│   COMMUNICATION AREA?  ◇           │
│ UPPER-LEVEL   │           │ YES   S207   S203      │
│ COMMUNICATION │           ▼                        ▼
│ DEVICE THAT   │  ┌──────────────────┐  ┌──────────────────┐
│ MANAGES       │  │ OUTPUT RESULT OF │  │ OUTPUT RESULT OF │
│ CURRENT OBJECT│  │ ANALYSIS (LOCAL  │  │ ANALYSIS (NO     │
│ OF ANALYSIS   │  │ DEGRADATION)     │  │ PROBLEM)         │
└──────────────┘  └──────────────────┘  └──────────────────┘
                           │ S209                    │
                           ▼                         │
                  ◇ IS QUALITY ◇    NO               │
                DEGRADATION BIASED TO ──────────┐    │
                SPECIFIC MOBILE                  │   │
                TERMINAL?  ◇                     │   │
                           │ YES                 │   │
                           ▼          S210       │   │
           ┌──────────────────────────────────┐ │   │
           │ LOCATE POSITION OF MOBILE TERMINAL│ │   │
           │ CONCENTRICALLY EXPERIENCING       │ │   │
           │ QUALITY DEGRADATION               │ │   │
           └──────────────────────────────────┘ │   │
                           │          S211       │   │
                           ▼                     │   │
           ┌──────────────────────────────────┐ │   │
           │ EVALUATE RADIO WAVE QUALITY AROUND│ │   │
           │ WIRELESS CELL HAVING DEGRADED     │ │   │
           │ QUALITY                           │ │   │
           └──────────────────────────────────┘ │   │
                           │          S215       │   │
                           ▼                     │   │
           ┌──────────────────────────────────┐ │   │
           │ OUTPUT RADIO WAVE QUALITY AROUND  │ │   │
           │ WIRELESS CELL                     │ │   │
           └──────────────────────────────────┘ │   │
                           │                     │   │
                           ▼         S212        │   │
                  ◇ IS RADIO WAVE ◇   NO         │   │
                QUALITY AROUND CURRENT ────────┐ │   │
                MOBILE TERMINAL POOR? ◇        │ │   │
     S214                  │ YES   S213        │ │   │
       │                   ▼                   │ │   │
┌──────────────┐  ┌──────────────────────┐     │ │   │
│ OUTPUT RESULT│  │ OUTPUT RESULT OF      │     │ │   │
│ OF ANALYSIS  │  │ ANALYSIS (DEGRADATION │     │ │   │
│ (PROBLEM OF  │  │ OF RADIO WAVE QUALITY)│     │ │   │
│ TERMINAL     │  └──────────────────────┘     │ │   │
│ MACHINE)     │           │                   │ │   │
└──────────────┘           │                   │ │   │
       │                   │                   │ │   │
       └───────────────────┴───────────────────┴─┴───┴──┐
                                                         ▼
                                                     ( END )
```

FIG. 8

NETWORK MANAGEMENT APPARATUS — 90

QUALITY ANALYSIS SYSTEM FOR COMMUNICATION NETWORK — 100

INPUT SECTION — 108

QUALITY INDICATOR EVALUATING SECTION — 101

CALL PROCESSING LOG COLLECTING SECTION — 102

CALL PROCESSING LOG ANALYZING SECTION

COMPLAINT DB — 114

COMPLAINT DETECTING SECTION — 115

QUALITY DEGRADATION DEVIATION CALCULATING SECTION — 103

NETWORK CONFIGURATION DB — 105

COMPLAINT ANALYZING SECTION — 116

CAUSE-OF-DEGRADATION ESTIMATING SECTION — 104

RESULT DISPLAY CONTROL SECTION — 106

DEGRADED-AREA ESTIMATING SECTION — 111

CUSTOMER INFORMATION DB — 109

RADIO WAVE QUALITY EVALUATING SECTION — 112

WIRELESS AREA DESIGN DB — 110

WIRELESS AREA ANALYZING SECTION 113

EP 2 237 596 A1

25

## FIG. 9

### 300 RESULT OF ANALYSIS OF CALL PROCESSING LOG

OBJECTS OF ANALYSIS: WIRELESS BASE STATION CONTROLLER A/
WIRELESS BASE STATION B/WIRELESS CELL C
PERIOD OF ANALYSIS: 2007/08/04 - 2007/08/05

| RANKING | INDEX OF MOBILE TERMINAL | FREQUENCY OF COMMUNICATION FAILURES | ID NO. OF MOBILE TERMINAL | COMPLAINT ARISING |
|---|---|---|---|---|
| 1 | 6 | 4 | 0x01010101 | Y |
| 2 | 5 | 3 | 0x11110000 | N |
| 3 | 9 | 3 | 0x11011011 | N |
| ... | ... | ... | ... | ... |
| 10 | 7 | 0 | 0x10101010 | N |

CAUSE OF QUALITY DEGRADATION: LOCAL DEGRADATION AT SPECIFIC
USER IN WIRELESS CELL

DEGREE OF DEVIATION OF QUALITY DEGRADATION: 0.3

▨ COMPLAINING TERMINAL

FREQUENCY OF COMMUNICATION FAILURES

1 2 3 4 5 6 7 8 9 10
INDEX OF MOBILE TERMINAL

| RANKING | INDEX OF MOBILE TERMINAL | RECEIVED POWER [dBm] | ID NO. OF MOBILE TERMINAL | COMPLAINT ARISING |
|---|---|---|---|---|
| 1 | 6 | -100 | 0x01010101 | Y |
| 2 | 5 | -105 | 0x11110000 | N |
| 3 | 9 | -110 | 0x11011011 | N |

CAUSE OF QUALITY DEGRADATION: DEGRADATION OF RADIO
WAVE QUALITY

### 309 RESULT OF ANALYSIS OF WIRELESS AREA

WIRELESS AREA 307

△ MOBILE TERMINAL
★ COMPLAINT

QUALITY OF RADIO WAVE
LOW ▨▨▨ HIGH

WIRELESS CELL A
WIRELESS BASE STATION B
306
308
304
305
BUILDING
310
WIRELESS CELL B
WIRELESS CELL C

EP 2 237 596 A1

# FIG. 10

START

INPUT OBJECT OF ANALYSIS — S200

ACQUIRE INDICATOR OF COMMUNICATION QUALITY FROM NETWORK MANAGEMENT APPARATUS — S201

IS INDICATOR OF COMMUNICATION QUALITY ABNORMAL? — S202

YES → DOES ANY COMPLAINT ARISE IN COMMUNICATION NETWORK? — S217

NO → OUTPUT RESULT OF ANALYSIS (NO PROBLEM) — S203

ACQUIRE CALL PROCESSING LOG FROM NETWORK MANAGEMENT APPARATUS — S204

IS TOTAL SUM OF FREQUENCIES OF COMMUNICATION FAILURES EQUAL TO OR GREATER THAN THRESHOLD? — S216

NO → EVALUATE RADIO WAVE QUALITY AROUND POINT AT WHICH COMPLAINT ARISES — S218

OUTPUT RADIO WAVE QUALITY AROUND POINT AT WHICH COMPLAINT ARISES — S219

CALCULATE DEVIATION OF QUALITY DEGRADATION — S205

CHANGE OBJECT OF DEVIATION CALCULATION TO UPPER-LEVEL COMMUNICATION DEVICE THAT MANAGES CURRENT OBJECT OF ANALYSIS — S208

IS QUALITY DEGRADATION BIASED TO SPECIFIC COMMUNICATION DEVICE OR COMMUNICATION AREA? — S206

IS RADIO WAVE QUALITY AROUND POINT AT WHICH COMPLAINT ARISES POOR? — S220

OUTPUT RESULT OF ANALYSIS (LOCAL DEGRADATION) — S207

OUTPUT RESULT OF ANALYSIS (DEGRADATION OF RADIO WAVE QUALITY) — S221

IS QUALITY DEGRADATION BIASED TO SPECIFIC MOBILE TERMINAL? — S209

LOCATE POSITION OF MOBILE TERMINAL CONCENTRICALLY EXPERIENCING QUALITY DEGRADATION — S210

EVALUATE RADIO WAVE QUALITY AROUND WIRELESS CELL HAVING DEGRADED QUALITY — S211

OUTPUT RADIO WAVE QUALITY AROUND WIRELESS CELL — S215

IS RADIO WAVE QUALITY AROUND CURRENT MOBILE TERMINAL POOR? — S212

OUTPUT RESULT OF ANALYSIS (PROBLEM OF TERMINAL MACHINE) — S214

OUTPUT RESULT OF ANALYSIS (DEGRADATION OF RADIO WAVE QUALITY) — S213

END

## FIG. 11

EXTERNAL NETWORK 70

MOBILE COMMUNICATION CORE NETWORK 46 60 45

NETWORK MANAGEMENT APPARATUS 90

43 50 44

WIRELESS BASE STATION CONTROLLER

40 WIRED LINK 41 42

30 WIRELESS BASE STATION

WIRELESS BASE STATION 31

WIRELESS BASE STATION 32

20 WIRELESS LINK 21

22

23 24

10 MOBILE TERMINAL 11

12

13 14

80 WIRELESS CELL 81 82

EP 2 237 596 A1

28

# FIG. 12

```
                    ┌──────────────┐
                    │    START     │
                    └──────┬───────┘
                           │
        ┌──────────────────▼──────────────────┐   S100
        │  ACQUIRE INDICATOR OF               │
        │  COMMUNICATION QUALITY FROM         │
        │  NETWORK-SIDE COMMUNICATION         │
        │  DEVICE MANAGING WIRELESS CELL      │
        └──────────────────┬──────────────────┘
                           │
                           ▼                       S101
                      ╱─────────╲
          YES        ╱ IS INDICATOR OF ╲
     ◄──────────────◄ COMMUNICATION QUALITY ►
                     ╲   ABNORMAL?   ╱
                      ╲─────────────╱
                           │ NO
```

**S100** ACQUIRE INDICATOR OF COMMUNICATION QUALITY FROM NETWORK-SIDE COMMUNICATION DEVICE MANAGING WIRELESS CELL

**S101** IS INDICATOR OF COMMUNICATION QUALITY ABNORMAL? — YES → **S102** PROBLEM OF WHOLE WIRELESS CELL OR NETWORK-SIDE COMMUNICATION DEVICE

NO →

**S103** DOES ANY COMPLAINT ARISE IN WIRELESS CELL? — NO → **S104** WIRELESS CELL IS NORMAL

YES →

**S105** ACQUIRE RESULT OF MEASUREMENT OF RADIO WAVES OR RESULT OF ESTIMATION OF RADIO WAVE PROPAGATION FOR WIRELESS CELL

**S106** DOES POINT AT WHICH COMPLAINT ARISES LIE IN RADIO WAVE SKIP ZONE? — NO → **S108** OTHER LOCAL PROBLEMS SUCH AS INTERFERENTIAL DEGRADATION

YES → **S107** LOCAL PROBLEM OF RADIO WAVE QUALITY (SKIP ZONE) IN WIRELESS CELL

END

## INTERNATIONAL SEARCH REPORT

International application No.

PCT/JP2008/072825

| A. CLASSIFICATION OF SUBJECT MATTER |
|---|
| *H04W24/08*(2009.01)i, *H04B17/00*(2006.01)i, *H04L12/56*(2006.01)i, *H04M3/00* (2006.01)i |

According to International Patent Classification (IPC) or to both national classification and IPC

| B. FIELDS SEARCHED |
|---|
| Minimum documentation searched (classification system followed by classification symbols) |
| H04B7/24-7/26, H04W4/00-99/00, H04B17/00, H04L12/56, H04M3/00 |

Documentation searched other than minimum documentation to the extent that such documents are included in the fields searched

Jitsuyo Shinan Koho      1922-1996   Jitsuyo Shinan Toroku Koho   1996-2009
Kokai Jitsuyo Shinan Koho   1971-2009   Toroku Jitsuyo Shinan Koho   1994-2009

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2002-204305 A  (NTT Docomo Inc.), 19 July, 2002 (19.07.02), Par. Nos. [0031] to [0053]; Figs. 2 to 5 | 1,3-6,8, 10-13,15, 17-20,22 |
| A | (Family: none) | 2,7,9,14,16, 21 |
| Y | JP 2006-340050 A  (NEC Corp.), 14 December, 2006 (14.12.06), Par. Nos. [0027] to [0057], [0065]; Fig. 14 & EP 1887819 A1       & WO 2006/129792 A1 | 1,3-6,8, 10-13,15, 17-20,22 |
| Y | JP 11-261471 A  (Fujitsu Ltd.), 24 September, 1999 (24.09.99), Par. Nos. [0018] to [0040] & US 6161010 A | 4-6,11-13, 18-20 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search    05 February, 2009 (05.02.09) | Date of mailing of the international search report    17 February, 2009 (17.02.09) |
|---|---|
| Name and mailing address of the ISA/    Japanese Patent Office | Authorized officer |
| Facsimile No. | Telephone No. |

Form PCT/ISA/210 (second sheet) (April 2007)

**INTERNATIONAL SEARCH REPORT**

| International application No. |
|---|
| PCT/JP2008/072825 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-223218 A (Toshiba Corp.), 09 August, 2002 (09.08.02), | 4-6,11-13, 18-20 |
| A | Par. Nos. [0017] to [0021], [0057], [0095] to [0096] (Family: none) | 7,14,21 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP P1999261471 A
- JP H11261471 B
- JP 2007338895 A